(19) Europäisches Patentamt
European Patent Office
Office européen des brevets

(11) **EP 4 306 946 A1**

(12) **EUROPEAN PATENT APPLICATION**
published in accordance with Art. 153(4) EPC

(43) Date of publication:
**17.01.2024 Bulletin 2024/03**

(21) Application number: **22767153.4**

(22) Date of filing: **08.03.2022**

(51) International Patent Classification (IPC):
**G01N 25/18** (2006.01)    **G16Z 99/00** (2019.01)

(52) Cooperative Patent Classification (CPC):
**G01N 25/18; G16Z 99/00**

(86) International application number:
**PCT/JP2022/010043**

(87) International publication number:
**WO 2022/191199 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.03.2021 JP 2021037203**

(71) Applicant: **University Public Corporation Osaka
Osaka-shi, Osaka 545-0051 (JP)**

(72) Inventors:
• **SHIBAHARA, Masakazu
Sakai-shi, Osaka 599-8531 (JP)**

• **IKUSHIMA, Kazuki
Sakai-shi, Osaka 599-8531 (JP)**
• **TAKAHASHI, Riku
Sakai-shi, Osaka 599-8531 (JP)**
• **KITANI, Yuji
Sakai-shi, Osaka 599-8531 (JP)**
• **YAMAUCHI, Yuki
Sakai-shi, Osaka 599-8531 (JP)**

(74) Representative: **Grünecker Patent- und
Rechtsanwälte
PartG mbB
Leopoldstraße 4
80802 München (DE)**

(54) **PHYSICAL CONSTANT ESTIMATION VALUE ACQUISITION METHOD**

(57)    Provided are a method of accurately reproducing, about a temperature-dependent physical constant of a solid substance, in a cyberspace, up to a high-temperature region, a change involved in a temperature rise and acquiring an estimated value conforming to an actual phenomenon, a program for causing a computer to execute the method, a recording medium storing the program, an apparatus including an arithmetic operation unit that executes the program, a processed product manufacturing method using the method, and a fatigue damage monitoring method. An estimated value acquisition method of the present invention is a method of acquiring an estimated value A of a temperature-dependent physical constant of a solid substance at a predetermined temperature, the method including data-assimilating a predicted value F of the physical constant calculated by a finite element method analysis to a measured value Y of the physical constant to acquire the estimated value A.

Fig 1

**Description**

Technical Field

The present invention relates to a method of acquiring an estimated value of a physical constant at a predetermined temperature, a program for causing a computer to execute the method, a recording medium storing the program, an apparatus including an arithmetic operation unit that executes the program, a method of manufacturing a processed produce using the method, and a fatigue damage monitoring method. This application claims the priority of Japanese Patent Application No. 2021-037203 filed in Japan on March 9, 2021, the content of which is incorporated herein.

Background Art

Among physical phenomena that occur as temperature rises, for internal stress, deformation, and the like, which are difficult to directly measure, a method of obtaining predicted values by simulation using a finite element method (FEM) analysis is widely used (for example, Non Patent Literature 1). However, there has been a problem in that the predicted values obtained by the FEM analysis do not always agree with actual phenomena.

For example, the strength of a hull is an extremely important parameter from the viewpoint of ensuring safety. However, it has been extremely difficult to accurately evaluate the strength of the hull because, when designing hull structure, it is necessary to consider that various external forces such as the weight of freight, variable loads due to waves, and loads due to a hull motion act.

Therefore, the FEM analysis is used for a hull strength evaluation and the hull structure is designed based on a result of the FEM analysis. However, if stress applied to the hull is estimated larger than an actual phenomenon on the FEM analysis, the strength of the hull is excessively increased by, for example, increasing plate thickness. As a result, there has been a problem in that deterioration in fuel efficiency due to an increase in weight is caused.

A protective heat plate method has been known as a method of measuring thermal conductivity of a solid material. However, there has been a problem in that a complicated test apparatus is used in this method. Further, there has been a problem in that a test specimen having size 300 mm or more is necessary and there is a limit in a test specimen size. Furthermore, a maximum operating temperature is 700°C in the method. Measurement in a higher temperature region has been difficult.

Besides, a laser flash method has also been known as the method of measuring thermal conductivity of the solid material. However, in this method as well, there has been a problem in that a test specimen having thickness of 1 mm or more is necessary and there is a limit in a test specimen size. There has been a problem in that an error tends to increase because of a thermal loss and the like due to radiation when temperature is high and accuracy in a high temperature region is low.

Citation List

Non Patent Literature

Non Patent Literature 1: Eiichi Murakawa: "Welding Deformation Simulation Targeting Real Structures", Journal of High Temperature Society of Japan, 2007,33(3),128-136

Summary of Invention

Technical Problem

Therefore, an object of the present invention is to provide a method of accurately reproducing, about a temperature-dependent physical constant of a solid substance, in a cyberspace, up to a high-temperature region, a change involved in a temperature rise and acquiring an estimated value conforming to an actual phenomenon.

Another object of the present invention is to provide a method of accurately estimating, about a temperature-dependent physical constant of a solid substance, using a simple apparatus, up to a high-temperature region, a change involved in a temperature rise and acquiring an estimated value conforming to an actual phenomenon.

Another object of the present invention is to provide a computer program for acquiring, about an estimated value at a predetermined temperature of a temperature-dependent physical constant of a solid substance, an estimated value conforming to an actual phenomenon.

Another object of the present invention is to provide a recording medium for storing the computer program.

Another object of the present invention is to provide an apparatus including an arithmetic operation unit that executes the computer program.

Another object of the present invention is to provide a manufacturing method for manufacturing a processed product using the method of acquiring the estimated value.

Another object of the present invention is to provide a method of monitoring fatigue damage using the method of acquiring the estimated value.

Solution to Problem

As a result of diligently studying in order to solve the problems described above, the present inventors found that, about a temperature-dependent physical constant of a solid substance, an estimated value A obtained by data-assimilating a predicted value F obtained by an FEM analysis to a measured value Y obtained by simple measurement can reproduce a phenomenon more realistically in a cyberspace. The present invention is completed based on these findings.

That is, the present invention provides an estimated value acquisition method of acquiring an estimated value A of a temperature-dependent physical constant of a solid substance at a predetermined temperature, the method including determining a predicted value F of the physical constant by a finite element method analysis, and data-assimilating the predicted value F to a measured value Y of the physical constant to acquire the estimated value A.

The present invention also provides the estimated value acquisition method, further including implementing the acquisition of the estimated value A at $\Delta t$°C intervals from room temperature to a temperature at which the solid substance melts, giving, as an initial value, an estimated value $A_{t-\Delta t}$ at $(t-\Delta t)$°C to the finite element method analysis of the physical constant at t°C to obtain a predicted value $F_t$, and data-assimilating the obtained predicted value $F_t$ to a measured value $Y_t$ at t°C, obtain an estimated value $A_t$ at t°C.

The present invention also provides the estimated value acquisition method, in which the data assimilation is performed with an ensemble Kalman filter.

The present invention also provides the estimated value acquisition method, wherein the finite element method analysis is a thermal conduction analysis or a thermal-elastic-plastic analysis by a finite element method.

The present invention also provides a program for causing a computer to execute acquisition of an estimated value of a temperature-dependent physical constant of a solid substance at a predetermined temperature, the program including:

a first step of inputting a measured value Y of the physical constant into the computer;
a second step of causing the computer to execute a finite element method analysis to obtain a predicted value F of the physical constant; and
a third step of causing the computer to execute work for data-assimilating the predicted value F to the measured value Y, to obtain an estimated value A.

The present invention also provides a computer-readable recording medium, the recording medium storing the program.

The present invention also provides an apparatus including an arithmetic operation unit that executes the program.

The present invention also provides a processed product manufacturing method. The method includes obtaining a processed product of a solid substance through the following steps:

step 1 of acquiring an estimated value of a temperature-dependent physical constant of a solid substance at a predetermined temperature by the estimated value acquisition method; and
step 2 of determining a processing method for the solid substance using the acquired estimated value.

The present invention also provides a fatigue damage monitoring method. The method includes acquiring, by the estimated value acquisition method, an estimated value of a temperature-dependent physical constant of a solid substance at a predetermined temperature and monitoring, using the acquired estimated value, fatigue damage of a structure formed from the solid substance.

Advantageous Effects of Invention

The estimated value acquisition method of the present invention is a method of obtaining, with a method of data-assimilating a predicted value calculated by an FEM analysis with a measured value measured using a simple apparatus, an estimated value of a temperature-dependent physical constant of a solid substance. With the method, it is possible to obtain an estimated value extremely approximate to an actual phenomenon.

With the estimated value acquisition method of the present invention, it is possible to estimate all physical constants dominating a specific physical property that changes as temperature rises. Therefore, the estimated value acquisition method of the present invention can be utilized in all scenes by selecting a physical constant. For example, if a parameter dominating thermal conduction is selected as the thermal constant, it is possible to accurately estimate thermal conductivity of a solid substance. If a solid substance processing method is set based on an obtained estimated value, it is possible to realize improvement of production efficiency and a cost reduction.

Brief Description of Drawings

[Figure 1] Figure 1 is an explanatory diagram of a data assimilation method using an ensemble Kalman filter.
[Figure 2] Figure 2 is a flowchart in an embodiment of an estimated value acquisition method according to the present invention.
[Figure 3] Figure 3 is a diagram showing an example of a heat input point for a solid substance of the present invention.
[Figure 4] Figure 4 is a diagram showing an example of a model diagram used in the estimated value acquisition method of the present invention.
[Figure 5] Figure 5 is a diagram showing that, by repeating an FEM analysis and data assimilation a plurality of times, an obtained estimated value is more approximate to a true value.
[Figure 6] Figure 6 is a diagram showing that estimated values of specific heat (c) and thermal conductivity ($\lambda$) obtained by the estimated value acquisition method according to the present invention were extremely approximate to true values in an entire temperature range.
[Figure 7] Figure 7 is a diagram showing that estimation results of temperature histories at A, B, and C points obtained in an example 2 were extremely approximate to true values.
[Figure 8] Figure 8 is a diagram showing that an estimation result of thermal conductivity at the A point obtained in the example 2 was extremely approximate to a true value.
[Figure 9] Figure 9 is a diagram showing that an estimation result of specific heat obtained in an example 3 was extremely approximate to a true value.

Description of Embodiments

[Estimated value acquisition method]

An estimated value acquisition method of the present invention is a method of acquiring an estimated value A at a predetermined temperature of a temperature-dependent physical constant of a solid substance (or an estimated value A of a physical constant fluctuating according to heat input of the predetermined temperature),
the method data-assimilating a predicted value F of the physical constant calculated by an FEM analysis to a measured value Y of the physical constant and acquiring the estimated value A of the physical constant.
The predetermined temperature is, for example, temperature in a range of a room temperature (20°C) to a temperature at which the solid substance melts (for example, when the solid substance is SUS304, 1300°C).
The solid substance is not particularly limited. Examples of the solid substance include metal materials such as stainless steel (for example, SUS304 or SUS316), steel, iron steel, iron, aluminum, nickel, copper, zinc, titanium, magnesium, tin, molybdenum, and alloys of the foregoing.
The physical constant includes all physical constants dominating a change in a physical characteristic of the solid substance involved in a temperature rise. Examples of the physical constant include specific heat, thermal conductivity, a Young's modulus, a Poisson's ratio, a coefficient of linear expansion, and yield stress.
Here, as a method of data-assimilating the predicted value F to the measured value Y, the predicted value F only has to be data-assimilated to the measured value Y about a physical constant at temperature of at least one point in a range of the room temperature to the temperature at which the solid substance melts. However, from the viewpoint of obtaining an estimated value closer to an actual phenomenon, it is preferable to data-assimilate the predicted value F to the measured value Y about a physical constant at temperatures of two or more points in the temperature range.
As the method of data-assimilating the predicted value F to the measured value Y, above all, it is preferable to data-assimilate the predicted value F of the physical constant to the measured value Y at intervals of a specific temperature ($\Delta t°C$) selected from the range of 10 to 500°C, such as 10°C intervals, 50°C intervals, 100°C intervals, 200°C intervals, or 500°C intervals. From the view point of a reduction of a calculation load and improvement of accuracy, it is particularly preferable to data-assimilate the predicted value F of the physical constant to the measured value Y at 100°C intervals. Therefore, the $\Delta t°C$ is preferably 100°C.
That is, from the viewpoint of obtaining an estimated value with satisfactory accuracy while reducing a calculation load, it is preferable to implement the data assimilation to obtain the estimated value A at $\Delta t°C$ intervals in the temperature range of the room temperature to the temperature at which the solid substance melts.

As an acquisition method for the predicted value F, the predicted value F from the room temperature to the temperature at which the solid substance melts may be acquired by fixing an initial value and performing the FEM analysis. However, from the viewpoint of further reducing an error and obtaining the predicted value F with satisfactory accuracy while reducing a calculation load, it is preferable to reset the initial value and perform the FEM analysis periodically (for example, at $\Delta t°C$ intervals) in the temperature range of the room temperature to the temperature at which the solid substance melts.

As the initial value given when the initial value is fixed and the FEM analysis is performed, a literature value of the physical constant or a measured value of the physical constant can be used. When the literature value cannot be obtained, a literature value of another solid substance having a physical property approximate to a physical property of the solid substance can also be used.

When the initial value is reset and the FEM analysis is performed periodically, it is preferable to start estimation from the room temperature (or a low temperature side), give an already-obtained estimated value A as the initial value, and performs the FEM analysis of a physical constant of the next temperature. For example, it is preferable to give an estimated value $A_{t-\Delta t}$ at $(t-\Delta t)°C$ to the FEM analysis of the physical constant at $t°C$ as the initial value.

That is, as the estimated value acquisition method, it is preferable to implement the acquisition of the estimated value A at $\Delta t°C$ intervals from the room temperature to the temperature at which the solid substance melts, give the estimated value $A_{t-\Delta t}$ at $(t-\Delta t)°C$ to the FEM analysis at $t°C$ of the physical constant as the initial value to obtain the predicted value $F_t$, data-assimilate the obtained predicted value $F_t$ to the measured value $Y_t$ at $t°C$ of the physical constant, and obtain the estimated value $A_t$ at $t°C$. Both of the $(t-\Delta t)°C$ and $t°C$ are included in the range of the room temperature to the temperature at which the solid substance melts. $\Delta t°C$ is, for example, a temperature selected from 10 to 500°C and is preferably 100°C.

In other words, as the estimated value acquisition method, it is preferable to implement the acquisition of the estimated value A from the low temperature side at $\Delta t°C$ intervals from the room temperature to the temperature at which the solid substance melts, give, as the initial value, the estimated value $A_{t-\Delta t}$ at temperature $[(t-\Delta t°C)]$ closest to the temperature among already-obtained estimated values A to the FEM analysis of the physical constant at the predetermined temperature $[t(°C)]$ to obtain the predicted value $F_t$, data-assimilate the obtained predicted value $F_t$ to the measured value $Y_t$ at the temperature $[t(°C)]$, and obtain the estimated value $A_t$ at the temperature $[t(°C)]$.

Both of the $(t-\Delta t)°C$ and $t°C$ are included in the range of the room temperature to the temperature at which the solid substance melts. $\Delta t°C$ is, for example, a temperature selected from 10 to 500°C and is preferably 100°C.

When the initial value is reset and the FEM analysis is performed periodically, in particular, as the initial value given in the FEM analysis of the physical constant of the solid substance at a predetermined temperature (t1) from the room temperature (20°C) to 100°C, it is preferable to use a literature value of the physical constant or a measured value of the physical constant. When the literature value cannot be obtained, a literature value of another solid substance having a physical property approximate to a physical property of the solid substance can also be used.

When the initial value is reset and the FEM analysis is performed periodically, as an initial value given to the FEM analysis of the physical constant of the solid substance at a predetermined temperature (t2) from the temperature higher than 100°C to the temperature at which the solid substance melts, from the viewpoint that an error can be corrected and an estimated value with more satisfactory accuracy can be obtained, it is preferable to start estimation from the room temperature (or the low temperature side) and use, as the initial value, the estimated value A at temperature closest to the predetermined temperature (t2) among already-obtained estimated value A.

Therefore, as the estimated value acquisition method, above all, it is preferable to implement the following step 1 and step 2 in this order and obtain the estimated value A at the predetermined temperature from the room temperature to the temperature at which the solid substance melts:

step 1: a step of obtaining an estimated value $A_{t1}$ at the predetermined temperature (t1) from the room temperature to 100°C; giving a literature value or a measured value as an initial value, performing the FEM analysis of the physical constant at the temperature (t1) to thereby obtain a predicted value $F_{t1}$, data-assimilating the obtained predetermined value $F_{t1}$ to a measured value $Y_{t1}$, and obtaining an estimated value $A_{t1}$; and

step 2: a step of obtaining an estimated value $A_{t2}$ at the predetermined temperature (t2) from the temperature higher than 100°C to the temperature at which the solid substance melts; giving, as the initial value, an estimated value at temperature closest to the predetermined temperature (t2) among already-obtained estimated values A, performing the FEM analysis of the physical constant at the temperature (t2) to thereby obtain a predicted value $F_{t2}$, data-assimilating the obtained predetermined value $F_{t2}$ to a measured value $Y_{t2}$, and obtaining an estimated value $A_{t2}$.

Note that the predicted value $F_{t1}$ is the predicted value F at the temperature (t1) and the measured value $Y_{t1}$ is the measured value Y at the temperature (t1).

The predicted value $F_{t2}$ is the predicted value F at the temperature (t2) and the measured value $Y_{t2}$ is the

measured value Y at the temperature (t2).

As the estimated value acquisition method, above all, from the viewpoint of accurately performing the estimation of the physical constant, it is preferable to set the predetermined temperature at $\Delta t°C$ intervals and repeatedly implement the acquisition of the estimated value A in the step 2.

(FEM analysis)

In the present invention, the predicted value F at the predetermined temperature is calculated by the FEM analysis. In the present invention, it is preferable to reset the initial value periodically (for example, at $\Delta t°C$ intervals) and perform the FEM analysis. It is preferable to perform the acquisition of the estimated value A in order from a low temperature side to a high temperature side, give the estimated value A obtained by the estimation of the physical constant at the immediately preceding temperature to the FEM analysis of the physical constant at the next temperature as the initial value to obtain the predicted value F. In other words, when the acquisition of the estimated value A at $\Delta t°C$ intervals is implemented in order from the low temperature side from the room temperature to the temperature at which the solid substance melts and the FEM analysis of the physical constant at t°C is performed, it is preferable to give, as the initial value, the estimated value A at temperature $[(t-\Delta t)°C]$ closest to t°C among already-obtained estimated values A.

Specifically, in the FEM analysis of the physical constant of the solid substance at the predetermined temperature (t2°C) from the temperature higher than 100°C to the temperature at which the solid substance melts, an estimated value $A_{t2-\Delta t}$ obtained by implementing the FEM analysis of the physical constant and the data assimilation at the immediately preceding temperature (that is, $(t2-\Delta t)°C$) is given as the initial value. In this way, a predicted value $F_{t2}$ at t2°C is obtained. An estimated value $A_{t2}$ obtained by data-assimilating the predicted value $F_{t2}$ at t2°C to a measured value $Y_{t2}$ is given to the FEM analysis of the physical constant at the immediately following temperature (that is, $(t2+\Delta t)°C$) as the initial value.

Note that, in the FEM analysis of the physical constant of the solid substance at the predetermined temperature from the room temperature (20°C) to 100°C, it is preferable to use a literature value of the physical constant or a physical constant measured value as the initial value. When the literature value cannot be obtained, a literature value of another solid substance having a physical property approximate to a physical property of the solid substance can also be used. The FEM analysis of the physical constant at the predetermined temperature from the room temperature (20°C) to 100°C may be collectively performed.

Here, the FEM analysis is a method of dividing a continuous solid substance into a plurality of very small elements (for example, Shell elements) (=mesh division) and approximately predicting a behavior. The number of elements and the number of nodal points can be set as appropriate. When the number of elements and the number of nodal points increase, prediction accuracy is improved but a calculation load tends to increase.

In the FEM analysis, an analysis program can be selected and used as appropriate according to a physical constant for which an estimated value is to be obtained. For example, when specific heat and thermal conductivity are estimated, it is preferable to select an analysis program capable of executing a thermal conduction analysis or a thermal-elastic-plastic analysis.

In the FEM analysis, from the viewpoint of accurately estimating a physical constant requiring a nonlinear analysis, it is preferable to give ensemble members (the number of members is, for example, two to ten, preferably, three to eight) as an initial values and execute the FEM analysis according to the members.

As the FEM analysis, it is preferable to use, in particular, an idealized explicit solution method FEM. The idealized explicit solution method FEM is a method of using a dynamic explicit solution method FEM and is a method of advancing an analysis with calculation independent for each element and each analytical degree of freedom.

The FEM analysis is performed by setting a state vector for nodal points of the elements obtained by the mesh division.

The state vector includes a degree of freedom and a displacement vector. The degree of freedom is set by being selected as appropriate according to a characteristic of a physical constant to be predicted. For example, when a physical constant dominating thermal conductivity is predicted, a nodal point temperature is set. When a physical constant dominating a dynamical phenomenon is predicted, a nodal point temperature and a strain are set. A physical constant desired to be calculated can be added to a displacement vector.

In the FEM analysis, when two or more physical constants relating to a change in a specific physical characteristic selected from the illustrated physical constants are added to the displacement vector, estimated values of two or more physical constants can be simultaneously acquired.

A state vector of nodal points in the case in which specific heat ($c_t$) and thermal conductivity ($\lambda_t$) are simultaneously estimated as the physical constant dominating thermal conductivity can be represented by, for example, the following Expression (1). The state vector represented by the following Expression (1) includes a nodal point temperature ($\theta_{dof}$) as a degree of freedom and includes the specific heat ($c_t$) and the thermal conductivity ($\lambda_t$) in a displacement vector.
[Expression 1]

$$X^f = \left\{ \begin{array}{c} \theta_{dof} \\ c_t \\ \lambda_t \end{array} \right\} \qquad (1)$$

A state vector of nodal points in the case in which a Young's modulus (E) and a Poisson's ratio (v) are simultaneously estimated as the physical constant dominating the dynamical phenomenon can be represented by, for example, the following Expression (2). The state vector represented by the following Expression (2) includes the nodal point temperature ($\theta_{dof}$) and a strain ($\varepsilon$) as degrees of freedom and includes the Young's modulus (E) and the Poisson's ratio (v) in a displacement vector.
[Expression 2]

$$X^f = \left\{ \begin{array}{c} \theta_{dof} \\ \varepsilon \\ E \\ v \end{array} \right\} \qquad (2)$$

(Data assimilation)

In the data assimilation, the predicted value $F_t$ at the predetermined temperature (t) is data-assimilated to the measured value $Y_t$ at the predetermined temperature (t) to obtain the estimated value $A_t$ at the predetermined temperature (t). Note that an acquisition method for the measured value $Y_t$ is explained in detail below.

The data assimilation is a technique for reflecting a measured value on a simulation according to an optimization theory and correcting a physical model. If the predicted value $F_t$ is data-assimilated to the measured value $Y_t$, the predicted value $F_t$ can be corrected and brought close to an actual phenomenon. Therefore, the estimated value $A_t$ obtained by the data assimilation is more accurate compared with the measured value $Y_t$.

The data assimilation is performed using, for example, a Kalman filter or an ensemble Kalman filter. For example, when an ensemble member is given to an initial value of the FEM analysis, it is preferable to use the ensemble Kalman filter.

In the data assimilation in which the Kalman filer or the ensemble Kalman filter is used, the predicted value $F_t$ and the measured value $Y_t$ are weighted by a Kalman gain to obtain the estimated value $A_t$. The Kalman gain is a weighting coefficient for minimizing an error of the predicted value $F_t$ and an error of the measured value $Y_t$. For example, in the data assimilation in which the ensemble Kalman filter is used, a value obtained by averaging fluctuation in the predicted value $F_t$ of the ensemble member (= ensemble perturbation) is used as the Kalman gain.

For example, the estimated value $A_t$ at the predetermined temperature (t) is calculated from the following Expression (3).
[Expression 3]

$$推定値A_t = 予測値F_t + カルマンゲイン \times \left( 実測値Y_t - 予測値F_t \right) \qquad (3)$$

```
Estimated value A_t = Predicted value F_t + Kalman gain ×

[Measured value Y_t - Predicted value F_t]    (3)
```

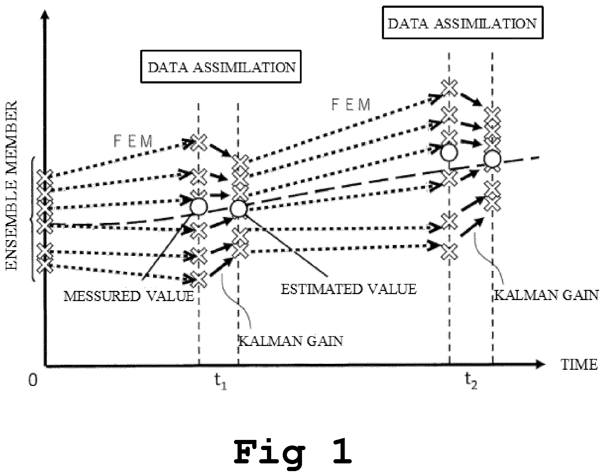

A diagram for explaining a data assimilation method in which the ensemble Kalman filter is used is shown in Figure 1.

The data assimilation only has to be performed at least once at intervals of a predetermined temperature. However, it is preferable to repeatedly perform the data assimilation a plurality of times because accuracy of an estimated value to be obtained can be further improved. As the number of times of repetition of the data assimilation, it is preferable to perform, for example, twice to fifty times (preferably, twice to five times), until an estimation result converges, that is, until displacement satisfies a static equilibrium state, work for giving, as an initial value, an estimated value obtained by first data assimilation, performing the FEM analysis again, and data-assimilating an obtained predicted value to a measured value again. After the static equilibrium state is obtained, it is possible to proceed to the next predetermined temperature.

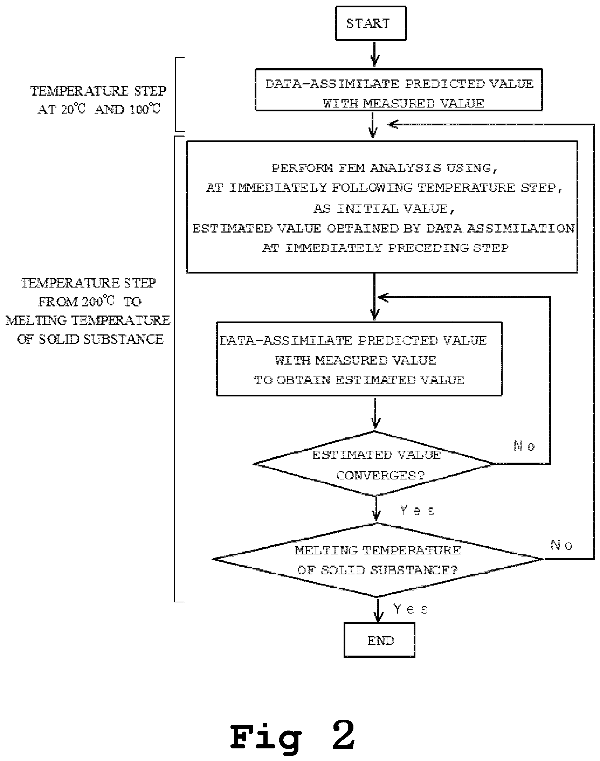

A flowchart of an embodiment of the estimated value acquisition method is shown in Figure 2. The temperature at which the solid substance melts is, for example, 1300°C, for example, when the solid substance is SUS304.

(Measured value Y and a measurement method for the measured value Y)

"The measured value $Y_t$ at the predetermined temperature (t)" includes a measured value in a heating process, that is, "the measured value $Y_t$ at t°C at a temperature rise time" and a measured value in a cooling process, that is, "the measured value $Y_t$ at t°C at a temperature drop time". These measured values may be included in combination. These measured values can be selected according to a type of a physical constant for which an estimated value is to be obtained. For example, it is preferable to, because an estimated value with more satisfactory accuracy is obtained, use the measured value in the heating process when thermal efficiency or the like is estimated and use the measured value in the cooling process when a coefficient of thermal conductivity, specific heat, or the like is estimated.

The measured value $Y_t$ includes a temperature history from the room temperature (20°C) to t°C of a temperature-dependent physical constant of a solid substance and a physical constant of the solid substance fluctuating according to the temperature history.

The measured value $Y_t$ is calculated by simply performing heat input of t°C to the solid substance and measuring a temperature history and a physical constant of the solid substance. As the solid substance to which the heat input is performed, for example, a thin plate (a size of which is, for example, 200mm×200m×10mm) made of the solid substance for which an estimated value is acquired can be used.

A measurement point of the measured value $Y_t$ (= a measurement part of the solid substance) includes at least a part different from a heat input point (a part where the heat input is implemented), the part being a point where temperature rises from the room temperature to t°C when the heat input of t°C is performed at the heat input point (for example, when the heat input of t°C is performed to the heat input point for approximately ten seconds).

There are at least two points as the measurement point. From the viewpoint of reducing a calculation load and accurately performing estimation, the measurement point is, for example, two to ten points, preferably, two to six points.

As the measurement point, it is preferable to set, when the heat input of t°C is performed to the heat input point, a point where temperature rises from the room temperature to t°C as a measurement point 1 closest to the heat input point and provide a plurality of measurement points such as measurement points 2, 3, 4, ⋯ , and 10 in positions gradually separating from the heat input point (for example, positions on a straight line). Consequently, it is possible to calculate, by performing a heat input test once, a plurality of temperature histories from the room temperature (20°C) to t°C set as an upper limit and fluctuation in a physical constant involved in the temperature histories, contributing to improvement of accuracy of an estimated value.

A method of performing the heat input to the solid substance is not particularly limited. Examples of the method include a method of using a thermocouple or the like. The heat input may be performed at a point using a stationary heat source or may be performed in a line using a line heat source.

The estimated value acquisition method of the present invention can be used for, for example, a manufacturing method for a processed product.

More specifically, it is possible to design an optimum processing method corresponding to a physical phenomenon of a solid substance using an estimated value obtained by the estimated value acquisition method. Consequently, it is possible to, for example, improve production efficiency and reduce cost.

Besides, the estimated value acquisition method can also be used for a fatigue damage monitoring method.

More specifically, by using an estimated value obtained in the estimated value acquisition method, it is possible to accurately predict a part where fatigue damage easily occurs in a structure formed of the solid substance. By intensively monitoring the part, it is possible to efficiently monitor occurrence of fatigue damage while suppressing cost.

[Program]

A program of the present invention is a program for causing a computer to execute acquisition of an estimated value at a predetermined temperature of a temperature-dependent physical constant of a solid substance, the program including:

a first step of inputting a measured value Y of the physical constant to the computer;
a second step of causing the computer to execute an FEM analysis and obtaining a predicted value F of the physical constant; and
a third step of causing the computer to execute work for data-assimilating the predicted value F to the measured value Y and obtaining an estimated value A.

(First step)

The first step is a step of inputting the measured value Y to the computer. Data of the measured value Y to be input is calculated by a measurement method for the measured value Y.

(Second step)

The second step is a step of causing the computer to execute the FEM analysis and obtaining the predicted value F.

(Third step)

The third step is a step of causing the computer to execute work for data-assimilating the predicted value F to the measured value Y and obtaining the estimated value A.
It is preferable to cause the computer to repeatedly execute the second step and the third state a plurality of times until an estimation result converges.
The program is preferably a program for causing a computer to execute acquisition of an estimated value at a predetermined temperature of a temperature-dependent physical constant of a solid substance, the program including:

a first step of inputting, to the computer, a measured value Y of the physical constant at $\Delta t°C$ intervals from a room temperature to a temperature at which the solid substance melts;
a second step of causing the computer to select an appropriate initial value and execute an FEM analysis in which the selected initial value is used and obtaining a predicted value F of the physical constant;
a third step of causing the computer to data-assimilate the predicted value F to the measured value Y and obtaining an estimated value A; and
a fourth step of causing the computer to execute the second step and the third step at $\Delta t°C$ intervals in a range of the room temperature to the temperature at which the solid substance melts.

(First step)

The first step is a step of inputting, to the computer, a measured value at $\Delta t°C$ intervals of the physical constant from the room temperature to the temperature at which the solid substance melts.

(Second step)

The second step is a step of causing the computer to select an appropriate initial value and execute the FEM analysis in which the selected initial value is used and obtaining the predicted value F.
In the FEM analysis of the physical constant at a predetermined temperature from the room temperature to 100°C, it is preferable to use, for example, a literature value or a measured value of the physical constant as the initial value. When the literature value cannot be obtained, a literature value of another solid substance having a physical property approximate to a physical property of the solid substance can also be used.
In the FEM analysis of the physical constant at a predetermined temperature from the temperature higher than 100°C to the temperature at which the solid substance melts, it is preferable to use the estimated value A at the closest temperature as the initial value.

(Third step)

The third step is a step of causing the computer to data-assimilate the predicted value F to the measured value Y and obtaining the estimated value A. More specifically, the third step is a step of causing the computer to data-assimilate the predicted value F at the predetermined temperature obtained in the second step to the measured value Y at the temperature and obtaining the estimated value A at the temperature.
In the second step and the third step, it is preferable to cause the computer to repeatedly execute, until an estimation result converges, a plurality of times, work for performing the FEM analysis using the obtained estimated value A as the initial value and data-assimilating the obtained predicted value F to the measured value Y.

(Fourth step)

The fourth step is a step of causing the computer to execute the second step and the third step at Δt°C intervals in the range from the room temperature to the temperature at which the solid substance melts. Note ththe term "at Δt°C intervals" means, for example, at intervals of a temperature selected from 10 to 500°C, preferably, at 100°C intervals.

The computer is not particularly limited if the computer is a device that can perform a necessary arithmetic operation. For example, an electronic calculator is suitably used as the computer.

With the program of the present invention, it is possible to highly accurately estimate a change in the physical constant involved in a temperature rise of the solid substance by providing the program to the computer and causing the computer to execute the program. The program of the present invention is provided to the computer by being recorded in a recording medium or via various transmission media.

The recording medium is explained in detail next. The transmission media are communication media in a computer network system for propagating program information as a carrier wave and supplying the program information. For example, a wired line such as an optical fiber and a wireless line are included in the communication media.

[Recording medium]

A recording medium of the present invention is a computer-readable recording medium, the recording medium storing the program explained above.

The recording medium is not particularly limited if the recording medium is capable of providing the program to the computer and causing the computer to execute the program. Examples of the recording medium include a CD-ROM, a flexible disk, a hard disk, a magnetic tape, a magneto-optical disk, and a nonvolatile memory card.

[Apparatus]

An apparatus of the present invention is an apparatus (a computer system) including an arithmetic operation unit that executes the program explained above.

The apparatus is configured from, for example, the arithmetic operation unit, a display unit, a storage unit, a keyboard, and a pointing device. The apparatus may include other components according to necessity.

The arithmetic operation unit is a central processing device that controls the entire computer. The display unit is a device that displays various input conditions, an analysis result, and the like in control executed by the arithmetic operation unit. The storage unit is a device that stores an analysis result derived by the arithmetic operation unit. The keyboard is a device used by an operator to input various input conditions and the like. The pointing device is configured by a mouse, a trackball, and the like.

The components, the combinations of the components, and the like of the present invention explained above are examples. Components can be added, omitted, replaced, and changed as appropriate in a range not departing from the gist of the present invention.

Examples

The present invention is more specifically explained below with reference to examples. However, the present invention is not limited by these examples.

Example 1

About specific heat (c) and thermal conductivity (λ) of a stainless steel plate, accuracy of estimated values obtained by the method of the present invention were evaluated by a twin experiment.

True values were acquired by the following method about temperature histories, specific heats, and thermal conductivities at six points explained below.

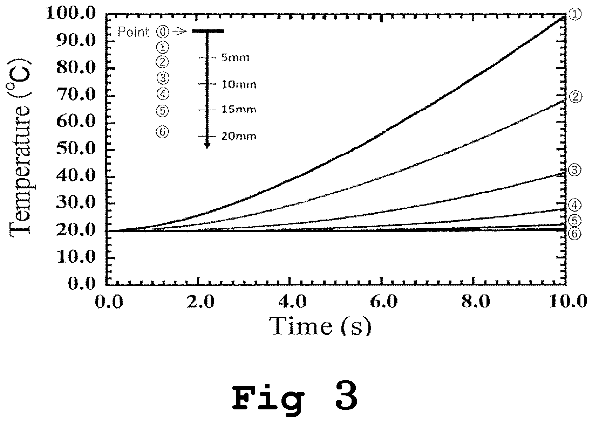

About a stainless steel plate (SUS304; length×width×thickness=200mm×200mm×10mm), heat input by a line heat source was performed, temperature was raised from the room temperature (20°C) to 1300°C, transitions of the temperature histories, the specific heats, and the thermal conductivities at the points were measured and set as true values. Note that the measurement was performed at six points near a heat source. As the six points, six points (see Figure 3) where temperature at ten seconds of a heat input time was 20.5°C, 22C°, 28C°, 41C°, 68C°, and 100°C were adopted.

(Pseudo measured values)

The true values obtained by the method to which errors were given were used as pseudo measured values in data assimilation.

Specifically, as pseudo measured values of the temperature histories at the six points, values obtained by giving normal distribution errors to the true values of the temperature histories were used.

As pseudo measurement values of the specific heats and the thermal conductivities at the six points, values obtained by giving 20% errors to the true values of the specific heats and the thermal conductivities were used.

(Acquisition of estimated values at 20°C and 100°C)

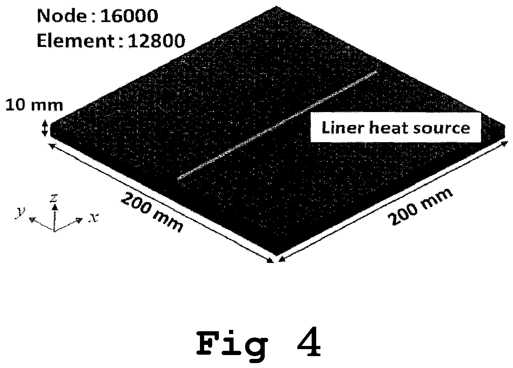

Pseudo measured values $_{20}$ and pseudo measured values $_{100}$ were respectively given as initial values, an analysis program capable of executing a thermal conduction analysis or a thermal-elastic-plastic analysis was selected, and element division was performed, and an FEM analysis was performed (see Figure 4). The number of nodal points of an analysis model was set to 16000 and the number of elements of the analysis model was set to 12800. Consequently, predicted values $_{20}$ of specific heat and thermal conductivity at 20°C and predicted values $_{100}$ of the specific heat and the thermal conductivity at 100°C were obtained.

The pseudo measured values $_{20}$ and the pseudo measured values $_{100}$ were respectively data-assimilated to the obtained predicted values $_{20}$ and the obtained predicted values $_{100}$ to obtain estimated values $_{20}$ and estimated values $_{100}$.

The obtained estimated values $_{20}$ and the obtained estimated values $_{100}$ were given as initial values, the FEM analysis was performed again, predicted values $_{20\text{-}1}$ at 20°C of the specific heat and the thermal conductivity and predicted values $_{100\text{-}1}$ at 100°C of the specific heat and the thermal conductivity were obtained, data-assimilation to the pseudo measured values was performed to obtain estimated values $_{20\text{-}1}$ and estimated values $_{100\text{-}1}$.

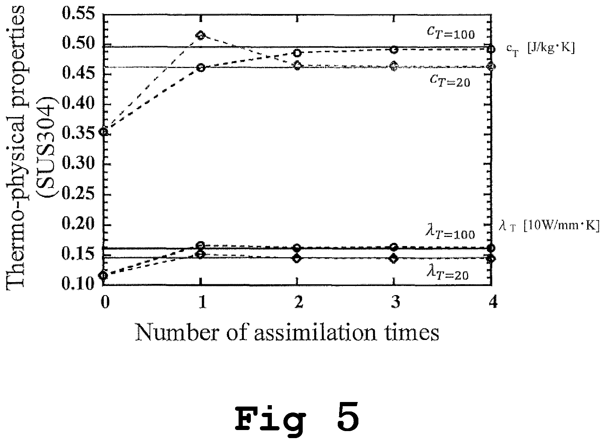

When this work was repeated three times, estimated values $_{20\text{-}3}$ and estimated values $_{100\text{-}3}$ extremely approximate to true values were obtained (see Figure 5).

(Acquisition of estimated values at temperature at a 100°C interval from 200 to 1300°C)

Predicted values $_{100\text{-}3}$ at 100°C were given as initial values, an analysis program capable of executing a thermal conduction analysis or a thermal-elastic-plastic analysis was selected, and the FEM analysis was performed to obtain predicted values $_{200}$ at 200°C. The obtained predicted values $_{200}$ were data-assimilated to pseudo measured values $Y_{200}$ at 200°C to obtain estimated values $C_{200}$.

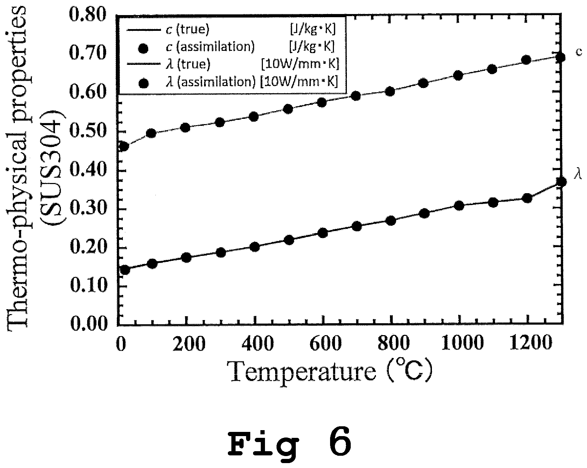

The FEM analysis and the data assimilation were repeatedly performed at a 100°C interval to 1300°C to obtain estimated values. The true values and the obtained estimated values are collectively shown in Figure 6. It is seen from Figure 6 that the estimated values (assimilation) of the specific heat (c) and the thermal conductivity ($\lambda$) obtained by the method explained above are extremely approximate to the true values (true) in an entire temperature region.

It is seen from the above result that, with the estimated value acquisition method of the present invention, estimated values with satisfactory accuracy can be obtained up to an extremely high temperature region by repeating the FEM analysis and the data assimilation stepwise at an interval of 100°C.

Example 2

True values were acquired by the following method about temperature histories and thermal conductivities at three points described below.

Heat input by a point heat source was performed to a stainless steel plate (SUS316; length×width×thickness=200mm×200mm×10mm), temperature was raised from the room temperature (20°C) to 1100°C, transitions of the temperature histories, the specific heats, and the thermal conductivities at the points were measured and set as true values. Note that the measurement was performed at three points of an A point separated 2 mm from a heat input point, a B point further separated 2 mm from the A point, and a C point further separated 2 mm from the B point on a center line of the heat input point.

(Pseudo measured values)

The true values of the temperature histories to which normal distribution errors were given were used as pseudo measured values of the temperature histories.

The true values of the thermal conductivities to which an error of 20% was given were used as pseudo measured values of the thermal conductivities.

An analysis program capable of executing a thermal conduction analysis or a thermal-elastic-plastic analysis was selected, element division was performed, and an FEM analysis of the temperature history and the thermal conductivity was performed. Predicted values of the temperature histories and the thermal conductivities at temperatures from 20°C to 1100°C were calculated in the same manner as in the example 1 except that the number of nodal points of an analysis model was set to 15954 and the number of elements of the analysis model was set to 13070 and that, in the FEM analysis of the physical constant at 20°C and 100°C, 0.355, which is a literature value, was given as an initial value.

The pseudo measured values were data-assimilated to the predicted values calculated in this way to obtain estimated values.

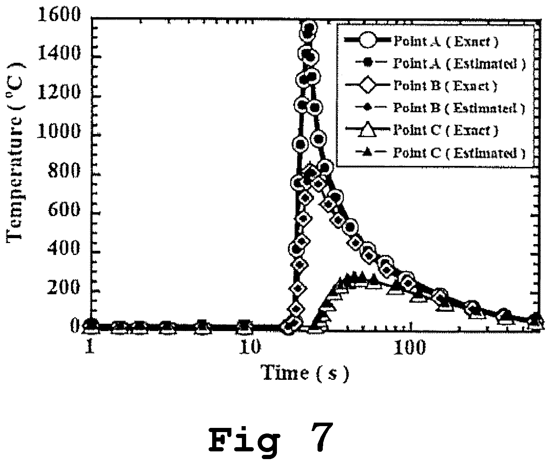

Estimation results and true values of the temperature histories at the three points are shown in Figure 7. It is seen from Figure 7 that all of estimated values at the three points are extremely approximate to the true values.

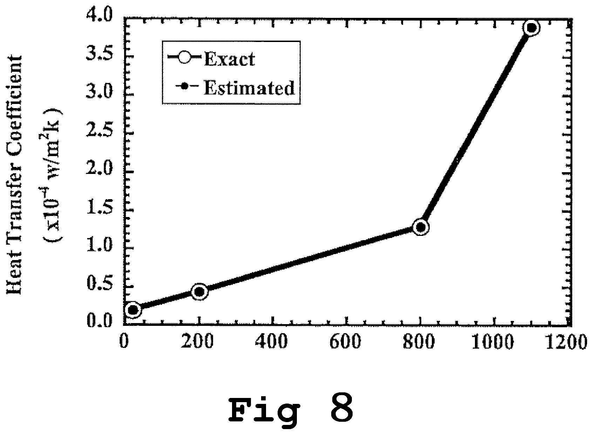

Estimation results and true values of the thermal conductivity at the A point are shown in Figure 8. It is seen from Figure 8 that all of estimated values are extremely approximate to the true values.

Example 3

About temperature histories and specific heats at the following four points, true values were acquired by the following method.

Line heat input in which TIG welding (150 A, 9 cm/minute) was used was performed to a stainless steel plate (SUS316; length × width × thickness = 200 mm × 200 mm × 10 mm), temperature was raised from the room temperature (20°C) to 800°C, transitions of the temperature histories and the specific heats at the points were measured and set as true values. Note that the measurement was performed at four points of an A point separated 7 mm from a heat input point, a B point further separated 2 mm from the A point, a C point further separated 2 mm from the B point, and a D point further separated 2 mm from the C point on a center line of the heat input point.

(Pseudo measured values)

The true values of the temperature histories to which normal distribution errors were given were used as pseudo measured values of the temperature histories.

An analysis program capable of executing a thermal conduction analysis or a thermal-elastic-plastic analysis was selected, element division was performed, and an FEM analysis of the temperature histories and the specific heats was performed. Predicted values of the temperature histories and the specific heats at temperatures from 20°C to 800°C were calculated in the same manner as in the example 1 except that the number of nodal points of an analysis model was set to 16673 and the number of elements of the analysis model was set to 18568 and that, in the FEM analysis of the physical constant at 20°C and 800°C, a random number of 0.45 to 0.67 was given as an initial value.

The pseudo measured values were data-assimilated to the predicted values calculated in this way to obtain estimated values.

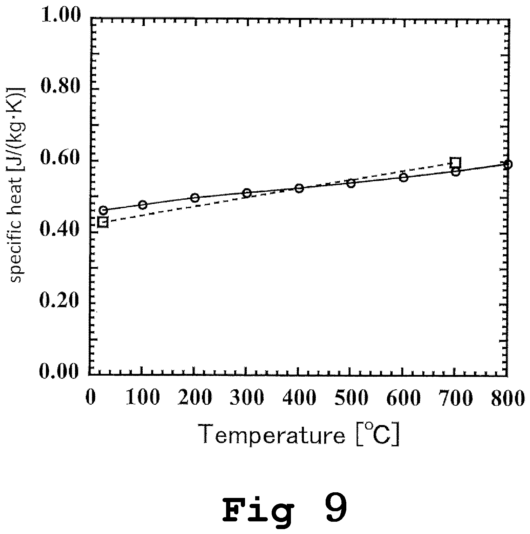

Estimation results and true values of the specific heats are shown in Figure 9. It is seen from Figure 9 that estimated values are extremely approximate to the true values.

Industrial Applicability

In the estimated value acquisition method of the present invention, estimated values extremely approximate to an actual phenomenon can be obtained about all physical constants dominating a specific physical characteristic that changes as temperature rises.

Therefore, with the estimated value acquisition method of the present invention, it is possible to accurately estimate thermal conductivity of a solid substance and, if a processing method for the solid substance is set based on an obtained estimated value, it is possible to realize improvement of production efficiency and a cost reduction.

**Claims**

1. An estimated value acquisition method of acquiring an estimated value A of a temperature-dependent physical constant of a solid substance at a predetermined temperature, the method comprising:

   determining a predicted value F of the physical constant by a finite element method analysis; and
   data-assimilating the predicted value F to a measured value Y of the physical constant to acquire the estimated value A.

2. The estimated value acquisition method according to claim 1, further comprising:

   implementing the acquisition of the estimated value A at $\Delta t$°C intervals from room temperature up to a temperature at which the solid substance melts;
   giving, as an initial value, an estimated value $A_{t-\Delta t}$ at $(t-\Delta t)$°C to the finite element method analysis of the physical constant at t°C to obtain a predicted value $F_t$; and
   data-assimilating the obtained predicted value $F_t$ to a measured value $Y_t$ at t°C to obtain an estimated value $A_t$ at t°C.

3. The estimated value acquisition method according to claim 1 or 2,
   wherein the data assimilation is performed with an ensemble Kalman filter.

4. The estimated value acquisition method according to any one of claims 1 to 3,
   wherein the finite element method analysis is a thermal conduction analysis or a thermal-elastic-plastic analysis by a finite element method.

5. A program for causing a computer to execute acquisition of an estimated value of a temperature-dependent physical constant of a solid substance at a predetermined temperature, the program comprising:

   a first step of inputting a measured value Y of the physical constant into the computer;
   a second step of causing the computer to execute a finite element method analysis, to obtain a predicted value F of the physical constant; and
   a third step of causing the computer to execute an operation that data-assimilates the predicted value F to the measured value Y, to obtain an estimated value A.

6. A computer-readable recording medium, the recording medium storing the program according to claim 5.

7. An apparatus comprising an arithmetic operation unit that executes the program according to claim 5.

8. A processed product manufacturing method comprising
   obtaining a processed product of a solid substance through the following steps:

   step 1 of acquiring an estimated value of a temperature-dependent physical constant of a solid substance at a predetermined temperature by the estimated value acquisition method according to any one of claims 1 to 4; and
   step 2 of determining a processing method for the solid substance using the acquired estimated value.

9. A fatigue damage monitoring method, comprising

   acquiring an estimated value of a temperature-dependent physical constant of a solid substance at a predetermined temperature by the estimated value acquisition method according to any one of claims 1 to 4; and
   monitoring, using the acquired estimated value, fatigue damage of a structure formed from the solid substance.

Fig 1

Fig 2

**Fig 3**

Fig 4

Fig 5

Fig 6

Fig 7

Fig 8

Fig 9

## INTERNATIONAL SEARCH REPORT

| International application No. |
| --- |
| **PCT/JP2022/010043** |

### A. CLASSIFICATION OF SUBJECT MATTER

***G01N 25/18***(2006.01)i; ***G16Z 99/00***(2019.01)i
FI: G01N25/18 L; G16Z99/00

According to International Patent Classification (IPC) or to both national classification and IPC

### B. FIELDS SEARCHED

Minimum documentation searched (classification system followed by classification symbols)

G01N25/00-25/72; G16Z99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2003-194637 A (TOSHIBA CORP.) 09 July 2003 (2003-07-09) <br> paragraphs [0001]-[0008], fig. 22, 23 | 1-9 |
| Y | WO 2016/031174 A1 (NEC CORP.) 03 March 2016 (2016-03-03) <br> paragraphs [0001]-[0088], fig. 1-6, 15 | 1-9 |
| Y | JP 2006-64413 A (SHIMANE UNIVERSITY) 09 March 2006 (2006-03-09) <br> paragraphs [0035], [0036] | 1-9 |
| A | JP 2005-83810 A (TOSHIBA CORP.) 31 March 2005 (2005-03-31) <br> entire text, all drawings | 1-9 |
| A | JP 2006-337233 A (TOSHIBA CORP.) 14 December 2006 (2006-12-14) <br> entire text, all drawings | 1-9 |
| A | JP 2020-201146 A (KOZO KEIKAKU ENGINEERING INC.) 17 December 2020 (2020-12-17) <br> entire text, all drawings | 1-9 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 May 2022** | **24 May 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/010043**

| Patent document cited in search report | | | Publication date (day/month/year) | Patent family member(s) | Publication date (day/month/year) |
|---|---|---|---|---|---|
| JP | 2003-194637 | A | 09 July 2003 | (Family: none) | |
| WO | 2016/031174 | A1 | 03 March 2016 | US 2017/0255720 A1 paragraphs [0001]-[0108], fig. 1-6, 15 | |
| JP | 2006-64413 | A | 09 March 2006 | (Family: none) | |
| JP | 2005-83810 | A | 31 March 2005 | (Family: none) | |
| JP | 2006-337233 | A | 14 December 2006 | (Family: none) | |
| JP | 2020-201146 | A | 17 December 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021037203 A

**Non-patent literature cited in the description**

- **EIICHI MURAKAWA.** Welding Deformation Simulation Targeting Real Structures. *Journal of High Temperature Society of Japan,* 2007, vol. 33 (3), 128-136